# EUROPÄISCHE PATENTANMELDUNG

(11) **EP 2 078 927 A2**
(43) Veröffentlichungstag der Anmeldung: **15.07.2009**
(21) Anmeldenummer: 08020588.3
(22) Anmeldetag: 27.11.2008
(51) Int. Cl.: G01C 21/34

(54) **Verfahren zum Betrieb eines Navigationssystems mit graphischer Darstellung von Fahrspuranweisungen**

(30) Priorität: 08.01.2008 DE 102008003395
(71) Anmelder: Navigon AG, 20251 Hamburg (DE)
(72) Erfinder: Schmidt, Thorsten W., 97318 Kitzingen (DE)
(74) Vertreter: von den Steinen, Axel

(57) **Zusammenfassung**

Die Erfindung betrifft ein Verfahren zum Betrieb eines Navigationssystems, bei welchem eine Fahrspuranweisung, die Anweisungen für den Benutzer enthält, um ausgehend von der aktuellen Position der berechneten Route durch ein Fahrspurwechselmanöver zu folgen, berechnet und eine Fahrspurschemaansicht (12), die die Fahrspuranweisung schematisiert graphisch darstellt, angezeigt wird. Hierbei wird ein erster Fahrbahnverlauf (13), der die Fahrbahnen vor dem Fahrspurwechselmanöver darstellt, und ein zweiter Fahrbahnverlauf, der die Fahrbahnen während des Fahrspurwechselmanövers darstellt, berechnet und in der Fahrspurschemaansicht (12) eine Kombination des ersten und zweiten Fahrbahnverlaufs angezeigt.

## Beschreibung

Die Erfindung betrifft ein Verfahren zum Betrieb eines Navigationssystems nach dem Oberbegriff des Anspruchs 1.

Gattungsgemäße Navigationssysteme werden beispielsweise als mobile Navigationsgeräte eingesetzt, um den Fahrer eines Kraftfahrzeugs von einem Startpunkt zu einem Zielpunkt zu führen. Das Navigationsgerät fragt dabei die Daten aus einer Datenbank ab, in der ein geographisches Gebiet durch Streckensegmente und Knotenpunkte beschrieben ist. Im Ergebnis beinhaltet die Datenbank also ein Netz von Streckensegmenten und dazwischen gelegenen Knotenpunkten, die das Wegenetz, insbesondere das Straßennetz, in einer maschinenlesbaren Form beschreiben und so eine Verarbeitung in einer Datenverarbeitungsanlage durch entsprechende Rechenalgorithmen erlauben.

Mittels eines geeigneten Routenberechnungsverfahrens wird aus diesen Daten der Datenbank eine Route in der Form einer Folge von Streckensegmenten und Knotenpunkten selektiert, die den Benutzer vom Startpunkt zum Zielpunkt führt.

Bekannte Navigationssysteme berechnen aber nicht nur die Route vom Startpunkt zum Zielpunkt. Darüber hinaus werden von den Navigationssystemen auch Manöveranweisungen berechnet, die Anweisungen für den Benutzer enthalten, um ausgehend von der aktuellen Position der Route Manöver auszuführen, durch die der Benutzer der Route folgt. Gelangt der Benutzer beispielsweise an eine Straßenkreuzung, so wird eine Manöveranweisung berechnet, die dem Benutzer angibt, in welche Richtung er an der Straßenkreuzung abzubiegen hat.

Für die Ausgabe der Manöveranweisungen an den Benutzer gibt es verschiedene Möglichkeiten. Üblicherweise wird die Manöveranweisung in der Form einer Sprachansage akustisch ausgegeben. Bei einem Abbiegevorgang an einer Kreuzung kann beispielsweise die Ansage erfolgen: "An der nächsten Kreuzung bitte links abbiegen". Die akustisch ausgegebenen Manöveranweisungen haben jedoch den Nachteil, dass sie dem Benutzer nach der Ansage nicht mehr fortlaufend zur Verfügung stehen. Hat der Benutzer die akustische Manöveranweisung nicht verstanden, muss die Manöveranweisung entweder wiederholt werden oder der Benutzer muss ohne Manöveranweisung weitermanövrieren. Um dieses Problem zu lösen, sind bei bekannten Navigationssystemen so genannte Manöverschemaansichten bekannt. In der Manöverschemaansicht wird zumindest das nächste und/oder übernächste auszuführende Manöver in schematisierter Form graphisch dargestellt und diese graphische Darstellung in einer Anzeigeeinrichtung bis zum Durchfahren des entsprechenden Manövers permanent angezeigt. Zudem wird bei bekannten Navigationssystemen in einer schematisierten Form dargestellt, welche Fahrbahnen am Ort des Manövers zum Durchführen des Manövers geeignet sind.

Da nur die geeigneten Fahrbahnen am Ort des Manövers angezeigt werden, ist es für den Fahrer nicht ersichtlich, ob im Vorfeld des Manövers noch Fahrbahnwechsel nötig sind, um auf die geeigneten Fahrbahnen zu gelangen. Dies ist besonders dann der Fall, wenn im Moment der Anzeige der geeigneten Fahrbahnen der aktuelle Fahrbahnverlauf nicht mit dem Fahrbahnverlauf am Ort des Manövers übereinstimmt, vor allem dann, wenn die Anzahl der Fahrbahnen an der aktuellen Position nicht mit der Anzahl der Fahrbahnen am Ort des Manövers übereinstimmt. Für den Fahrer ist in einer solchen Situation nicht ersichtlich, in welcher Art sich der Fahrbahnverlauf im Vorfeld des Manövers verändern wird. Dadurch kann es für den Fahrer notwendig werden, kurz vor dem Manöver noch Fahrbahnwechsel vorzunehmen. Falls die Verkehrssituation einen kurzfristigen Fahrbahnwechsel nicht erlaubt, kann dies dazu führen, dass der Fahrer das geplante und angezeigte Manöver nicht durchführen kann und auf Grund dessen gezwungen ist, die berechnete Route zu verlassen, was wiederum mit der Inkaufnahme eines Umweges verbunden ist.

Ausgehend von diesem Stand der Technik ist es deshalb Aufgabe der vorliegenden Erfindung, ein neues Verfahren zum Betrieb eines Navigationssystems vorzuschlagen, mit dem rechtzeitig und sicher die zum Verfolgen der berechneten Route geeigneten Fahrbahnen gewählt werden können und mit dem insgesamt die Anzahl der Fahrbahnwechsel minimiert werden kann bzw. dem Fahrer die Möglichkeit eröffnet wird, rechtzeitig die notwendigen Fahrbahnwechsel vorzunehmen.

Vorteilhafte Ausführungsformen der Erfindung sind Gegenstand der Unteransprüche.

Das erfindungsgemäße Verfahren beruht auf dem Grundgedanken, dass zur Darstellung der Fahrbahnen der Fahrbahnverlauf an der aktuellen Position, insbesondere vor einem Fahrspurwechselmanöver, und der Fahrbahnverlauf während eines Fahrspurwechselmanövers berechnet wird, und dass die beiden Fahrbahnverläufe als Kombination in der Form einer Fahrspurschemaansicht auf der Anzeigeeinrichtung des Navigationssystems graphisch schematisiert dargestellt werden. Dadurch entsteht für den Fahrer eine übersichtliche und intuitive Darstellung, die die Entwicklung des Fahrbahnverlaufes anzeigt und somit eine rechtzeitige Orientierung im Fahrbahnverlauf ermöglicht.

Um den Informationsgehalt der Fahrspurschemaansicht zu erhöhen, ist es vorteilhaft, neben dem Fahrbahnverlauf vor und während des Fahrspurwechselmanövers auch den Fahrbahnverlauf nach einem Fahrspurwechselmanöver zu berechnen und in Kombination mit dem ersten und zweiten Fahrbahnverlauf darzustellen. Dies ist besonders dann sinnvoll, wenn sich der Fahrbahnverlauf kurz nach einem Fahrspurwechselmanöver verändert, wie beispielsweise bei Zusammenführung von zwei oder mehr Fahrbahnen oder der Umwandlung einer regulären Fahrbahn in eine Abbiegefahrbahn.

In einer weiteren vorteilhaften Ausführung ist es vorgesehen, dass zusätzlich der Fahrbahnverlauf nach einem Abbiegemanöver, das auf das Fahrspurwechselmanöver folgt, angezeigt wird. Das ist dann besonders sinnvoll, wenn eine Spur für den Abbiegevorgang zur Verfügung steht, aber die nach dem Manöver erreichte Zielstraße mehr als eine Spur aufweist.

In einer besonders vorteilhaften Variante wird diese Situation für alle nach dem Manöver erreichbaren Straßen dargestellt. Dadurch erwartet den Nutzer an der gleichen Kreuzung immer die gleiche Grundstruktur der Fahrspurschemaansicht, lediglich der Manöverfahrspurverlauf verändert sich, wenn unterschiedliche Zielstraßen angesteuert werden.

Durch die Analyse der berechneten Fahrbahnverläufe wird für jedes Fahrspurwechselmanöver ein optimaler Fahrweg zum Verfolgen der berechneten Route durch das Fahrspurwechselmanöver berechnet und in der Form eines Manöverfahrspurverlaufes in der Fahrspurschemaansicht auf der Anzeigeeinrichtung des Navigationsgerätes dargestellt. Mit dieser Darstellung ist für den Fahrer frühzeitig vor einem Fahrspurwechselmanöver erkennbar, wie sich der Fahrbahnverlauf verändern wird und wann welche Fahrbahnen zu wählen sind, um ein anstehendes Fahrspurwechselmanöver mit größtmöglicher Sicherheit und einem Minimum an Fahrbahnwechseln durchzuführen, um im Endeffekt der berechneten Route sicher und problemlos zu folgen.

Zu einer Steigerung der Übersichtlichkeit und einer damit verbundenen verbesserten Ablesbarkeit für den Fahrer wird der angezeigte Manöverfahrspurverlauf in der Fahrspurschemaansicht optisch hervorgehoben dargestellt. Eine optimale Ablesbarkeit ist vor allem dann wichtig, wenn der Fahrer im dichten innerstädtischen Verkehr einer unbekannten Route folgt. Dabei ist es für den Fahrer notwendig, dem Verkehrsgeschehen ein Höchstmaß an Aufmerksamkeit zu widmen, um die Informationen und Anweisungen zum Verfolgen der berechneten Route möglichst schnell aufzufassen und umzusetzen.

Für eine Vielzahl von Fahrspurwechselmanövern kann die Situation entstehen, dass vom Navigationsgerät mehrere gleichermaßen geeignete Fahrwege zum Durchführen des Fahrspurwechselmanövers berechnet werden. Diese unterschiedlichen Fahrwege können auf Grund der Ausgangsfahrbahn an der aktuellen Position oder der Verkehrssituation am Ort des Fahrspurwechsels für die Durchführung des Fahrspurwechselmanövers unterschiedlich gut geeignet sein. Daher ist es besonders vorteilhaft, alle alternativen Fahrwege durch Manöverfahrspurverläufe darzustellen und in einer Fahrspurschemaansicht anzuzeigen.

Alternativ dazu können durch geeignete Verfahren auch nachfolgende Fahrspurmanöver analysiert werden. In der Fahrspurschemaansicht kann dann von zwei oder mehr Manöverfahrspurverläufen, die alternative Fahrwege entlang der Route darstellen, immer nur der mindestens eine Manöverfahrspurverlauf angezeigt werden, der für das Ausführen des nachfolgenden Fahrspurmanövers geeignet ist. Auch ist es vorgesehen, dass der genannte mindestens eine Manöverfahrspurverlauf, der für folgende Manöver empfohlen wird, optisch hervorgehoben dargestellt wird, während die anderen Manöverfahrspurverläufe dadurch für den Fahrer zwar erkennbar sind, er aber einschätzen kann, dass er vor oder nach dem anstehenden Manöver alsbald noch einen Fahrspurwechsel vornehmen muss, um der geplanten Route folgen zu können.

Die Anzeige von Fahrbahnverläufen in Fahrspurschemaansichten, in denen Fahrbahnen die baulich voneinander getrennt sind, auch optisch getrennt dargestellt werden, vermindert in besonders vorteilhafter Weise die durch das ungewollte Verlassen der berechneten Route entstehenden Umwege. Falls ein Fahrspurwechselmanöver in einem Fahrspurverlauf mit baulich getrennten Fahrbahnen falsch oder nicht rechtzeitig durchgeführt wird, entsteht dadurch oft ein langer Umweg. Durch die optisch getrennte Darstellung von baulich getrennten Fahrbahnen in den Fahrspurschemaansichten kann der Fahrer rechtzeitig auf die Situation aufmerksam gemacht werden und dem angezeigten Manöverfahrspurverlauf folgen, um einen Verbleib auf der berechneten Route sicherzustellen.

Die Darstellung der Fahrspurschemaansicht ist grundsätzlich beliebig. Je nach Anzeigeart des Navigationsgerätes können für die Darstellung der Fahrspurschemaansicht jedoch unterschiedliche Darstellungsformen von Vorteil sein.

Um die Ähnlichkeit zwischen der Verkehrssituation und der Darstellung auf der Anzeigeeinheit des Navigationsgerätes zu erhöhen, kann die Fahrspurschemaansicht als schematische Darstellung der Verkehrsituation, insbesondere Kreuzungssituation, erfolgen. Die Anzeige einer solchen Fahrspurschemaansicht auf der Anzeigeeinrichtung eines Navigationsgerätes erleichtert es dem Fahrer, die Fahrspurschemaansicht als die vor ihm liegende Verkehrssituation zu identifizieren und die Anweisungen des Manöverfahrspurverlaufs korrekt durchzuführen.

Die Darstellung der Fahrspurschemaansicht parallel zu anderen Bildinhalten kann die Übersichtlichkeit der Anzeigeeinrichtung des Navigationsgerätes erhöhen. Dies ist vor allem dann der Fall, wenn neben der Fahrspurschemaansicht noch weitere Manöverschemaansichten und/oder die Verkehrssituation angezeigt werden. Dabei sorgt die parallele Anzeige von mehreren Bildinhalten dafür, dass eine Vielzahl von Informationen permanent und trotzdem sowohl einzeln als auch im Ganzen übersichtlich dargestellt werden kann.

Die Fahrspurschemaansicht kann auch in den darzustellenden Kartenausschnitt eingezeichnet und auf der Anzeigeeinheit des Navigationssystems ausgegeben werden, was besonders vorteilhaft ist, wenn die Darstellung der Karte in einer Draufsicht erfolgt und der Darstellungsmaßstab des Kartenausschnitts eine übersichtliche Darstellung der Fahrspurschemaansicht erlaubt.

Besonders für mobile Navigationsgeräte oder Navigationsgeräte, deren Anzeigeeinrichtungen nur über eine begrenzte Größe verfügen, ist es sinnvoll, die Fahrspurschemaansicht allein auf der Anzeigeeinrichtung des Navigationsgerätes darzustellen. Dabei kann es sich bei der Darstellung der Fahrspurschemaansicht insbesondere, jedoch keineswegs ausschließlich, um die einzige Anzeigeart des Navigationsgerätes handeln.

Der Einsatz eines Navigationsgerätes ist für den Fahrer auch ohne aktivierte Zielführung von großem Nutzen, insbesondere wenn das Navigationsgerät mit einem erfindungsgemäßen Verfahren betrieben wird. Beispielsweise ermöglicht das Anzeigen von Fahrspurschemaansichten, die alle Fahrbahnverläufe innerhalb eines bestimmten Abstandes von der aktuellen Position darstellen, auch bei deaktivierter Zielführung ein vorausschauendes Fahrverhalten. Auch wenn ohne eine berechnete Route keine Manöverfahrspurverläufe angezeigt werden können, liefert eine Fahrspurschemaansicht dem Fahrer wertvolle Informationen über die kommenden Fahrbahnverläufe, die in vielen Fällen mit dem bloßen Auge nicht zu erkennen sind.

In besonders vorteilhafter Weise werden die zur Erstellung der Fahrspurschemaansichten benötigten Daten durch die Analyse von Datensätzen aus digitalen Straßenkarten berechnet. Dadurch werden die Fahrspurschemaansichten mit einer hohen Genauigkeit erstellt und in einfacher Weise auf einem aktuellen Stand gehalten.

Um die Rechenleistung des Navigationsgerätes während des Betriebes zu minimieren, ist es sinnvoll, Fahrbahnverlaufsinformationen schon vorab zu berechnen und in einem digitalen Kartenspeicherformat abzuspeichern. Die Fahrbahnverlaufsinformationen werden dann bei einem gewissen Abstand zwischen der aktuellen Position und einem Fahrspurwechselmanöver direkt aus dem Datenspeicher ausgelesen. Durch diesen Vorverarbeitungsschritt entfällt während des Betriebs des Navigationsgerätes die Notwendigkeit, den aktuellen Fahrbahnverlauf und weitere Fahrbahnverläufe zu erfassen und zu analysieren.

Verschiedene Aspekte des erfindungsgemäßen Verfahrens sind in den Zeichnungen schematisiert dargestellt und werden nachfolgend beispielhaft erläutert.

### Es zeigen:

- Fig. 1: Bildinhalte auf der Anzeigeeinrichtung eines bekannten Navigationssystems;
- Fig. 2: eine schematische Darstellung einer Fahrspurschemaansicht;
- Fig. 3: Bildinhalte auf der Anzeigeeinrichtung eines erfindungsgemäßen Navigationssystems;
- Fig. 4: alternative Bildinhalte der Anzeigeeinrichtung gemäß Fig. 3;
- Fig. 5: eine beispielhafte Kreuzungssituation mit zugehöriger Fahrspurschemaansicht in einer Ansicht von oben.

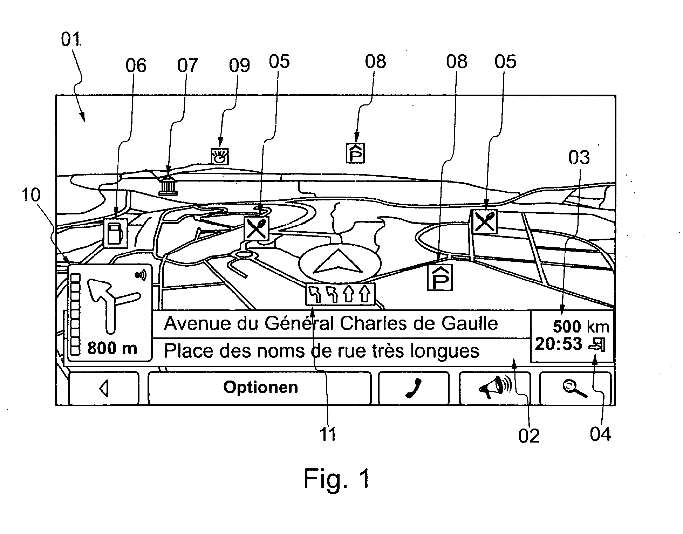

Fig. 1 zeigt beispielhaft die Bildinhalte, die auf der Anzeigeeinrichtung eines bekannten Navigationssystems dargestellt werden. Den Hauptinhalt bildet eine Darstellung der näheren Umgebung anhand einer Karte 01 aus der Vogelperspektive. Sowohl in der Karte 01 als auch auf dem übrigen Teil der Anzeigeeinrichtung wird eine Vielzahl von Informationen, wie beispielsweise der Straßenname 02, die Entfernung zum Ziel 03, die voraussichtliche Ankunftszeit 04, die nächstliegenden Gastronomiebetriebe 05, Tankstellen 06, Museen 07, Parkhäuser 08 und Sehenswürdigkeiten 09, angezeigt. Wenn eine Route von einem Startpunkt zu einem Zielpunkt berechnet wurde, werden zudem Informationen und Anweisungen ausgegeben, die es dem Fahrer erleichtern sollen, die berechnete Route zu verfolgen. Dazu gehören Manöverschemaansichten 10, die das nächste durchzuführende Manöver schematisiert darstellen, und Fahrbahnschemaansichten 11, die die zum Durchführen des nächsten Manövers geeigneten Fahrbahnen anzeigen. Die Fahrbahnschemaansichten 11 sind jedoch wenig sinnvoll und können sogar eine verwirrende Wirkung auf den Fahrer ausüben, besonders wenn der Fahrbahnverlauf an der aktuellen Position nicht mit dem Fahrbahnverlauf am Ort des nächsten Manövers übereinstimmt. In diesem Fall erhält der Fahrer keine Anweisungen und/oder Informationen, wie die zum Verfolgen der berechneten Route geeigneten Fahrbahnen zu erreichen sind. Aus den Manöverschemaansichten 10 und den Fahrbahnschemaansichten 11 auf der Anzeigeeinrichtung ist lediglich zu ersehen, dass ein Linksabbiegemanöver bevorsteht und dass dazu die beiden äußersten linken Fahrbahnen genutzt werden können.

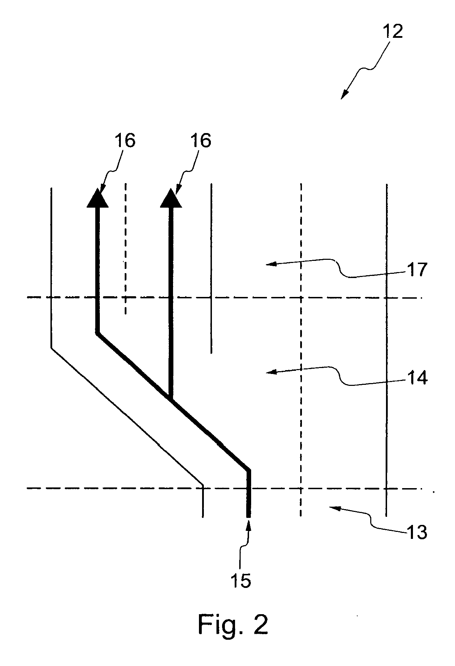

Fig. 2 zeigt eine Fahrspurschemaansicht 12, die den Fahrbahnverlauf 13 an der aktuellen Position, den Fahrbahnverlauf 14 während eines Fahrspurwechselmanövers und den Fahrbahnverlauf 17 nach dem Fahrspurwechselmanöver schematisiert darstellt. Die drei Fahrbahnverläufe 13, 14 und 17 sind in Fig. 2 zur besseren Erkennbarkeit durch Strichlinien voneinander getrennt. In der Fahrspurschemaansicht 12 ist außerdem ein Manöverfahrspurverlauf 15 dargestellt, der die Fahrbahnen optisch hervorgehoben anzeigt, die zum Verfolgen der berechneten Route geeignet sind. Die Fahrspurschemaansicht 12 enthält zwei Manöverfahrspurverläufe 15, die alternative Fahrwege 16 auf der berechneten Route symbolisieren. Die Anzeige von alternativen Fahrwegen 16 ermöglicht es dem Fahrer, auf die Verkehrssituation am Ort des Fahrspurwechsels zu reagieren und den optimalen Fahrweg zu wählen. Wenn es auf Grund der Verkehrssituation nötig ist, wird neben dem Fahrbahnverlauf 13 vor dem Fahrspurwechselmanöver und dem Fahrbahnverlauf 14 während des Wechselmanövers auch der Fahrbahnverlauf 17 nach dem Fahrbahnwechselmanöver in einer Fahrspurschemaansicht 12 dargestellt. Außerdem werden baulich voneinander getrennte Fahrbahnen auch in den Fahrspurschemaansichten 12 optisch voneinander getrennt dargestellt.

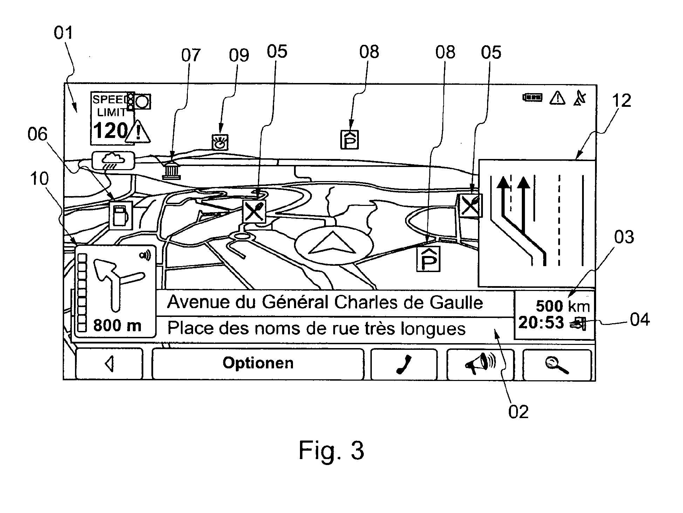

Fig. 3 zeigt Bildinhalte auf der Anzeigeeinrichtung eines erfindungsgemäßen Navigationssystems. Neben den Informationen und Anweisungen, wie beispielsweise dem Straßennamen 02, der Entfernung zum Ziel 03, der voraussichtlichen Ankunftszeit 04, den nächstliegenden Gastronomiebetrieben 05, Tankstellen 06, Museen 07, Parkhäusern 08 und Sehenswürdigkeiten 09, die auch auf der Anzeigeeinheit des bekannten Navigationssystems enthalten sind, ist anstatt der teilweise irreführenden Fahrbahnschemaansicht eine erfindungsgemäße Fahrspurschemaansicht 12 enthalten. Für den Fahrer stehen damit nicht nur Informationen über die Art und die Entfernung des nächsten Manövers in Form einer Manöverschemaansicht 10, sondern auch Informationen über die Entwicklung des Fahrbahnverlaufs und die bevorzugten Fahrbahnen in Form einer Fahrspurschemaansicht 12 zur Verfügung. In dieser bevorzugten Ausführungsform kann der Fahrer leicht ablesen, dass zum Linksabbiegen an der Ypsilonkreuzung zwei Fahrbahnen zur Verfügung stehen werden, die sich links an die derzeit bestehenden Fahrbahnen anschließen werden, und dass zumindest ein Fahrspurwechsel nach links vor dem Durchführen des nächsten Abbiegemanövers nötig sein wird.

Wenn mehrere Fahrspuren an einer Kreuzung für das Manöver geeignet sind, werden diejenigen optisch hervorgehoben bzw. ausschließlich dargestellt, die für das oder die folgenden Manöver am besten geeignet sind. Biegen beispielsweise zwei Fahrspuren links ab und als nächstes Manöver folgt ein Rechtsabbiegevorgang, wird nur die rechte der zwei Manöverfahrspurverläufe optisch hervorgehoben angezeigt und damit empfohlen, obwohl an dieser Kreuzung beide Spuren für das direkt bevorstehende Manöver geeignet sind.

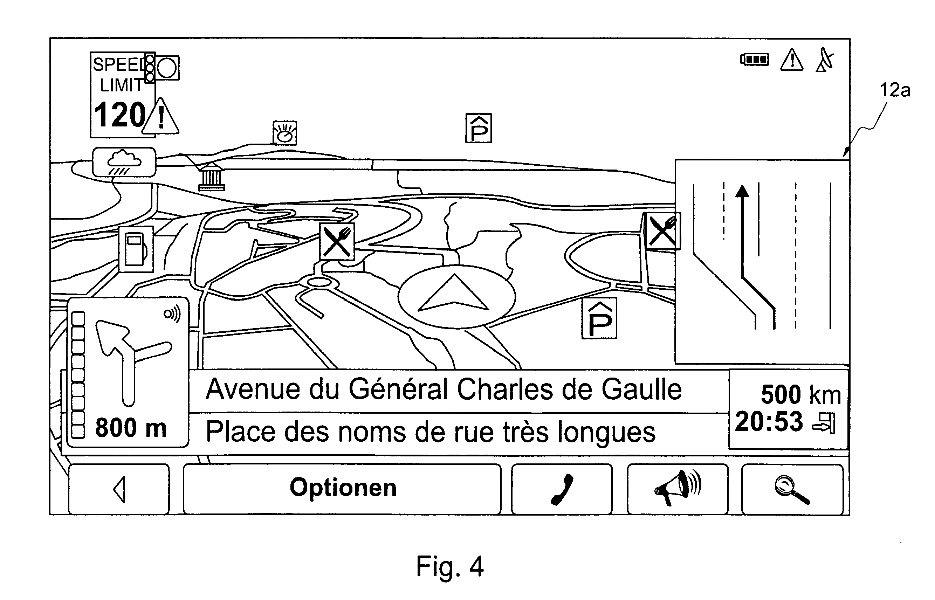

Fig. 4 zeigt die Bildinhalte der Anzeigeeinrichtung gemäß Fig. 3 eines erfindungsgemäßen Navigationssystems. Die Fahrspurschemaansicht 12a unterscheidet sich von der Fahrspurschemaansicht 12 dabei dadurch, dass von den zwei Fahrbahnen an der Ypsilonkreuzung nur die rechte Fahrbahn optisch hervorgehoben ist, um dem Fahrer anzuzeigen, dass er diese Fahrbahn wählen soll.

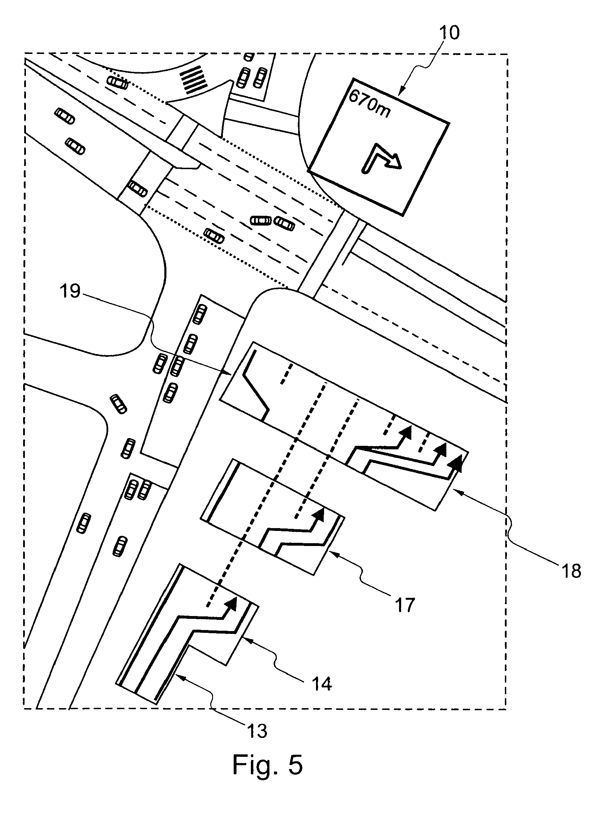

Fig. 5 zeigt eine Draufsicht auf eine beispielhafte Verkehrssituation mit zugehöriger Fahrspurschemaansicht, die zusätzlich den Fahrbahnverlauf 18 nach einem Abbiegemanöver darstellt. Hier ist zu erkennen, dass der Fahrspurverlauf 19 für ein Rechtsabbiegemanöver in den Komponenten der Fahrspurschemaansicht so dargestellt ist, dass aus einer einspurigen Straße 13 zwei Spuren entstehen, bei denen die rechte Spur 14 zu wählen ist. Danach zweigt eine weitere Spur ab, so dass erneut die rechte Spur 17 gewählt werden soll.

Nach dem Abbiegemanöver gelangt der Fahrer auf eine zweispurige Straße, wobei in diesem Fall beide Spuren 18 gewählt werden können, da gemäß der berechneten Route kein weiteres Manöver in unmittelbarer Nähe folgt, welches die Auswahl einer der Fahrspuren 18 notwendig macht.

Zusätzlich kann an der schematischen Darstellung des Fahrbahnverlaufs nach dem Manöver erkannt werden, dass in drei Straßen eingebogen werden könnte (links, rechts und geradeaus) und in jedem der Fälle eine zweispurige Straße folgt.

## Patentansprüche

1. Verfahren zum Betrieb eines Navigationssystems mit folgenden Verfahrensschritten:
a) Berechnung einer Route von einem Startpunkt zu einem Zielpunkt, wobei die Route aus einer Folge von Streckensegmenten und Knotenpunkten zwischen den Streckensegmenten besteht, die mit einem Routenberechnungsverfahren aus einer Datenbank, in der ein geographisches Gebiet durch Streckensegmente und Knotenpunkte beschrieben ist, selektiert wird,
b) Berechnung zumindest einer Fahrspuranweisung, die Anweisungen für den Benutzer enthält, um ausgehend von der aktuellen Position der berechneten Route durch ein Fahrspurwechselmanöver zu folgen,
c) Berechnung und Anzeige einer Fahrspurschemaansicht (12) an einer Anzeigeeinrichtung, wobei die Fahrspurschemaansicht (12) die Fahrspuranweisung schematisiert graphisch darstellt,
**dadurch gekennzeichnet,**
**dass**
c1) ein erster Fahrbahnverlauf (13) berechnet wird, der die Fahrbahnen vor dem Fahrspurwechselmanöver, insbesondere an der aktuellen Position, darstellt;
c2) ein zweiter Fahrbahnverlauf (14) berechnet wird, der die Fahrbahnen während des Fahrspurwechselmanövers darstellt;
c3) in der Fahrspurschemaansicht (12) eine Kombination des ersten und zweiten Fahrbahnverlaufs angezeigt wird.
2. Verfahren nach Anspruch 1,
**dadurch gekennzeichnet,**
**dass** zusätzlich ein dritter Fahrbahnverlauf berechnet wird, der die Fahrbahnen nach dem Fahrspurwechselmanöver darstellt, wobei in der Fahrspurschemaansicht (12) eine Kombination des ersten, zweiten und dritten Fahrbahnverlaufs angezeigt wird.
3. Verfahren nach Anspruch 1 oder 2,
**dadurch gekennzeichnet,**
**dass** zusätzlich ein vierter Fahrbahnverlauf (18) berechnet wird, der die Fahrbahnen nach einem auf das Fahrspurwechselmanöver folgenden Abbiegemanöver darstellt, wobei in der Fahrspurschemaansicht (12) eine Kombination des ersten, zweiten, dritten und vierten Fahrbahnverlaufs angezeigt wird.
4. Verfahren nach Anspruch 3,
**dadurch gekennzeichnet,**
**dass** in der Fahrspurschemaansicht (12) zusammen mit dem vierten Fahrbahnverlauf (18) alle mit dem Abbiegemanöver erreichbaren Zielstraßen angezeigt werden.
5. Verfahren nach einem der Ansprüche 1 bis 4,
**dadurch gekennzeichnet,**
**dass** ein Manöverfahrspurverlauf (15) berechnet wird, der den Fahrweg durch das Fahrspurwechselmanöver darstellt, wobei der Manöverfahrspurverlauf (15) in den Fahrspurschemaansichten (12) zusammen mit dem ersten, zweiten und dritten Fahrbahnverlauf angezeigt wird.
6. Verfahren nach Anspruch 5,
**dadurch gekennzeichnet,**
**dass** der in der Fahrspurschemaansicht (12) angezeigte Manöverfahrspurverlauf (15) optisch hervorgehoben dargestellt wird.
7. Verfahren nach einem der Ansprüche 1 bis 6,
**dadurch gekennzeichnet,**
**dass** in einer Fahrspurschemaansicht zumindest zwei Manöverfahrspurverläufe (15) angezeigt werden, die alternative Fahrwege (16) entlang der Route darstellen.
8. Verfahren nach einem der Ansprüche 1 bis 7,
**dadurch gekennzeichnet,**
**dass** in einer Fahrspurschemaansicht von zumindest zwei Manöverfahrspurverläufen, die alternative Fahrwege entlang der Route darstellen, zumindest ein Manöverfahrspurverlauf optisch hervorgehoben und/oder ausschließlich angezeigt wird, wobei dieser zumindest eine anzuzeigende Manöverfahrspurverlauf in Abhängigkeit eines nachfolgenden Fahrspurmanövers selektiert wird.
9. Verfahren nach einem der Ansprüche 1 bis 8,
**dadurch gekennzeichnet,**
**dass** bei der Anzeige der Fahrbahnverläufe baulich voneinander getrennte Fahrbahnen optisch getrennt voneinander dargestellt werden.
10. Verfahren nach einem der Ansprüche 1 bis 9,
**dadurch gekennzeichnet, dass** die Fahrspurschemaansicht (12) als schematische Darstellung der Verkehrssituation, insbesondere Kreuzungssituationen, auf der Anzeigeeinrichtung des Navigationsgerätes dargestellt wird.
11. Verfahren nach einem der Ansprüche 1 bis 10,
**dadurch gekennzeichnet,**
**dass** die Fahrspurschemaansicht (12) parallel zu anderen Bildinhalten, insbesondere schematischen Kartendarstellungen, auf der Anzeigeeinrichtung des Navigationsgerätes dargestellt wird.
12. Verfahren nach einem der Ansprüche 1 bis 10,
**dadurch gekennzeichnet,**
**dass** die Fahrspurschemaansicht (12) in den darzustellenden Kartenausschnitt eingezeichnet und auf der Anzeigeeinrichtung des Navigationsgerätes dargestellt wird.
13. Verfahren nach einem der Ansprüche 1 bis 10,
**dadurch gekennzeichnet,**
**dass** die Fahrspurschemaansicht (12) alleine auf der Anzeigeeinrichtung des Navigationsgerätes dargestellt wird.
14. Verfahren nach einem der Ansprüche 1 bis 13,
**dadurch gekennzeichnet,**
**dass** Fahrspurschemaansichten (12) bei deaktivierter Zielführung des Navigationsgerätes angezeigt werden, wobei in der Fahrspurschemaansicht (12) kein Manöverfahrspurverlauf (15) angezeigt wird, und wobei in der Fahrspurschemaansicht (12) alle Fahrbahnverläufe innerhalb eines bestimmten Abstandes zur aktuellen Position angezeigt werden.
15. Verfahren nach einem der Ansprüche 1 bis 14,
**dadurch gekennzeichnet,**
**dass** die Fahrspurschemaansicht (12) durch die Analyse von Datensätzen aus digitalen Straßenkarten berechnet wird.
16. Verfahren nach einem der Ansprüche 1 bis 15,
**dadurch gekennzeichnet, dass** das zur Erstellung der Fahrspurschemaansichten (12) genutzte digitale Kartenspeicherformat durch Vorverarbeitungsschritte derart optimiert wird, dass die berechneten Fahrbahnverlaufsinformationen im Kartenspeicherformat bereits enthalten sind und direkt ausgelesen werden können.
